# EUROPEAN PATENT SPECIFICATION

(11) **EP 2 505 399 B1**
(45) Date of publication and mention of the grant of the patent: **06.05.2020**
(21) Application number: 12162416.7
(22) Date of filing: 30.03.2012
(51) Int. Cl.: B60J 7/06, B60J 7/08, B60P 7/08

(54) **Cover for a transport body**
Abdeckung für einen Transportaufbau
Couverture pour une structure de transport

(30) Priority: 01.04.2011 DK 201100241
(43) Date of publication of application: 03.10.2012
(73) Proprietor: G. J. Holding ApS, 8380 Trige (DK)
(72) Inventor: Jensen, Jakob, 8380 Trige (DK)
(74) Representative: Nielsen, Leif

(56) References cited:
- FR-A1- 2 658 456
- US-A- 4 341 416
- US-A- 4 848 828
- US-A- 5 002 328
- US-A- 5 125 713
- US-A1- 2006 043 754

## Description

### Field of the Invention

The present invention concerns a cover for a transport body, such as a platform on a lorry, a trailer, or a container, the transport body having a bottom and a number of sides, the transport body being open upwards and covered by at least one flexible cover, the cover capable of being rolled up around a shaft by opening, the shaft interacting with at least one hydraulic cylinder which by means of pivotable arms forces the shaft to perform a curving movement above the transport body, where the shaft is connected with rotary means that rotate the shaft during the curving movement.

### Background of the Invention

Devices by which it is attempted to automate the cover are known, e.g. SE 404 915, which is a device for a wood chip box consisting of two hydraulically powered pivotable arms arranged at two opposing sides of a transport body. Between the two pivotable arms is disposed a shaft on which are rolled a cover and two draw wires. When the hydraulics is activated, the shaft is pivoted and the cover is rolled off. The device has several disadvantages. The pivotable arms are disposed in such a way that it is not possible to open the transport body at the rear for easy unloading of goods. Furthermore, the cover does not sufficiently allow the goods to be loaded with a top. The attempt by the device to ensure that the cover fits sufficiently tight is also unnecessarily complicated.

Another attempt is found in WO 98/24656 which is a device consisting of two telescoping pivotable arms arranged at two opposite sides of a transport body. Between the two telescoping pivotable arms is mounted a shaft on which is fitted a hydraulic motor providing that the cover mounted on the shaft can be rolled off, while a coiled wire at each end of the shaft provides for the moving the telescoping arms from one side edge to the other. The length of the telescoping arm is changed by means of a guide roller mounted on the arm and moving across a guide rail mounted on the transport body at varying height. This design has several disadvantages. The design is unnecessarily complicated with many movable parts that all require maintenance in order to operate. Furthermore, the permanently mounted guide rail means that the maximum height of the side of the transport body is reduced.

US 4,341,416 A discloses an improved roll-up truck cover assembly for dump trucks and the like having upstanding side and end walls defining an upwardly open body for receiving particulate material. The cover assembly comprises a flexible top cover substantially coextensive with the body cross section viewed from above and one end of the cover extends across and is attached to one end portion of the body. A take-up roll for the cover has a spring bias for rotation in a take-up direction and is mounted on a pair of arms at upper end portions of the latter. Lower end portions of the arms are pivotally attached externally at sides of the truck body to swing the take-up roll through a long shallow arc in a lengthwise traverse of the truck body. With the take-up roll at an opposite end portion of the body and the cover in closed position over the upwardly exposed opening in the body, a braking apparatus secures the take-up roll against inadvertent rotation whereby to maintain the cover in a taut condition over the opening. The cover includes an extending pleat perpendicular to the shaft. The design is ineffective as the pleat makes it difficult to roll up the cover on the shaft. When the cover is rolled upon the shaft the thickness if the rolled up cover differs along the shaft as the pleat has three layers in comparing to the rest of the cover that only has one layer. This result in an uneven roll up and a higher risk of having the cover roll up wrongly.

Common to all known solutions is the fact that they do not in a satisfactory way solve the task rapidly and automatically, that they put great demands on maintenance with consequent reduced reliability, and that they take up so much space that the transport body is diminished or that incorporation of emptying doors at the rear is hindered.

### Object of the Invention

The object of the invention is to provide a reliable, rapid and automatic device for covering a transport body, thereby ensuring that the cover is applied during all driving with empty as well as full transport body, whereby emission of CO₂ and hereby the global warming is reduced while simultaneously improving the work safety for the driver, and the carrier is provided an economic saving by the reduced fuel consumption.

### Description of the Invention

The object can be achieved by the features of the characterising portion of claim 1.

By designing the flexible cover with a fold which is perpetually drawn together by a rubber strap disposed in zig-zag and fastened to both sides of the fold, it is achieved that if the load is higher than allowed by the immediate covering, the flexible cover becomes additionally flexible in that the rubber strap and the fold formed by means of the rubber strap are just extended such that an automatic extension of the flexible cover is provided, either locally where a higher loader is possibly present or along the entire length of the load. In that way is achieved a complete adaptation of the flexible cover, and a flexibility is achieved as well in that the cover is retained by a force which is determined by the rubber strap but with a flexibility providing that possible wind action on the tarpaulin allows a certain yieldability such that a strong wind action on the tarpaulin will allow a modest lift to a certain degree of the tarpaulin, and correspondingly, during strong rain, a depression of the tarpaulin can occur in that a partial unfolding of the fold is effected, and the rubber strap can ensure a constant tension in the flexible cover. At the same time, the flexible cover has the advantage that if water, snow, or ice is accumulated on the flexible cover, a rolling up can be effected automatically and a subsequent automatic unrolling as well, which can be effected in a very few minutes, after which water, snow, or ice will automatically be removed from the flexible cover.

According to the invention, the flexible cover consists of a permanently mounted first section and a second, rollable section, the permanently mounted first section having a side which is fastened by at least one flexible fastening means to a first of the sides of the transport body, where the rollable second section of the flexible cover is fastened to the first side of the transport body as well, and where the first and second sections of the flexible cover are joined along the fold in the second section of the flexible cover whereby the fold in the second section is covered by the first section.

Hereby is achieved a self-tightening action by the flexible cover which due to the resilient mounting of the two tarpaulin parts is also present by loads with top on the goods while at the same time the wide straps at each end edge of the tarpaulin, by means of the mounting with rubber straps, will ensure that the tarpaulin is held tightly against the edge of the transport body. A tight tarpaulin does not flutter during driving, ensuring reduced fuel consumption and thereby CO₂ emission while simultaneously increasing the durability of the tarpaulin.

Each end of the shaft can be seated or suspended in a pivotable arm which is provided with a reel arrangement for winding a wire on and off, the wire being fastened at one end by a helical spring to the transport body and at the other end wound around the shaft with a direction of winding which is opposite relative to the flexible cover. Automatic rotation of the shaft may thus occur by means of a wire such that the shaft rotates automatically during rolling the flexible cover on or off. Based on the fact that a wire necessarily has a greater length at the middle of the movement of the arms from one outer side to the other, it is required that a helical spring automatically has hold of the end of the wire such that a constant tensile force is ensured in the wire.

Each end of the shaft can instead be seated in a pivotable arm where the shaft is connected to a hydraulic motor where the motor is designed with a torque limiter for adapting the torque in the shaft to rolling the flexible cover on or off, respectively. Since a hydraulic system for activating the pivotable arms is already present, it is a matter of course to provide a hydraulic motor with pressure and return lines through the pivotable arms such that the shaft can be rotated by a hydraulic motor. As the torque to be produced determines the force with which the flexible cover is pulled, it will be expedient if the motor applies a constant torque on the shaft. By a suitable choice of regulating valves for the hydraulic motor it will be possible to operate with different torque, depending on whether rolling off or rolling on of the flexible cover is taking place.

The flexible cover can be fastened to the pivotable shaft in a groove in the shaft. Hereby is achieved a reduced load on the tarpaulin as compared with normal fastening where the tarpaulin is mounted on the shaft by bolts or screws whereby greater local stresses occur in the tarpaulin with consequent reduced durability.

Pivotable arms, hydraulic cylinders and wire devices are designed such that they can be mounted at a level on the chassis of the transport body which will enable opening of the transport body at the rear. Hereby is achieved possibility of opening the tailboard of the transport body, thereby ensuring rapid unloading of goods by dump body, or unhindered access to the transport body by cleaning, for example.

The flexible cover can be formed by a segmented tarpaulin where the individual tarpaulin parts preferably are secured by using elastic rubber straps mounted in a zig-zag pattern. Using plastic rubber straps in a zig-zag pattern may entail that a flexible fastening of the tarpaulin parts may occur such that these tarpaulin parts adapt themselves to the load present that may exist on the tarpaulin covering a load. The rubber straps will thus under all circumstances keep the tarpaulin in tension, irrespective of the tarpaulin being pushed upwards by too high load or downwards due to ice, snow, or water possibly lying on the tarpaulin.

The shaft contains a groove in the pivotable shaft for fastening the cover, the groove being formed in an extruded tubular profile, preferably made of plastic, aluminium or metal, with a groove for fastening the tarpaulin in the pivotable shaft. The design of the shaft of an extruded item provides that shafts can be made in optional lengths, and it becomes possible to produce shafts relatively cheaply but on the other hand very efficiently since it becomes possible to form the shaft with the necessary grooves. In addition to a groove for fastening the flexible cover, the shaft may also contain e.g. channels utilised as hydraulic piping internally of the extruded profile.

The pivotable arms can be designed with a bend whereby the shaft and the fastening of the hydraulic cylinder is elevated in relation to the fastening of the pivotable arm on the transport body. By letting the pivotable arms have a bend it can be achieved that fastening of the pivotable arms and fastening of the hydraulic cylinder may be provided at the same level on a transport body, whereby it becomes possible to provide pivotable arms and hydraulic cylinder at approximately the same level and in any case above possible doors that can be opened at the end of e.g. a lorry platform. By using a bend on the pivotable arms a positive arm can thus obtained at any position for the work of the hydraulic cylinder. It is thus avoided that the hydraulic cylinder becomes locked in a certain situation because pressure appears, e.g. on the arm, where the pressure against the arm is directed towards the fastening centre of the arm, whereby any movement of this arm cannot take place.

### Description of the Drawing

- Fig. 1: is a perspective view of a lorry with a transport body fitted with a device according to the invention;
- Fig. 2: is a schematic detail of a device according to the invention;
- Fig. 3: is a side view of a lorry with the preferred embodiment for fastening the flexible cover on the transport body;
- Fig. 4: is the pivotable shaft in a possible embodiment of the fastening of the flexible cover on the pivotable shaft; and
- Fig. 5: is a perspective view of the transport body with the preferred embodiment of joining the two main parts of the flexible cover.

### Detailed Description of the Invention

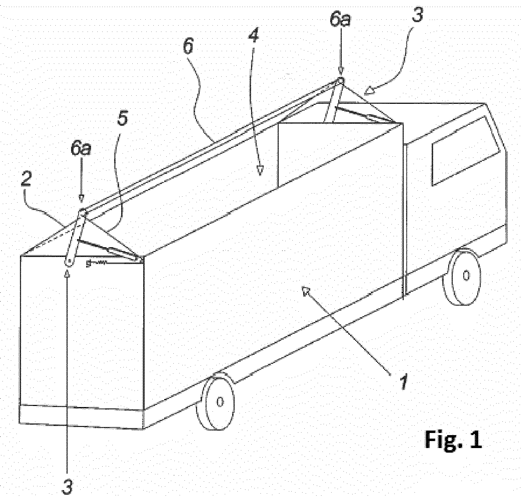

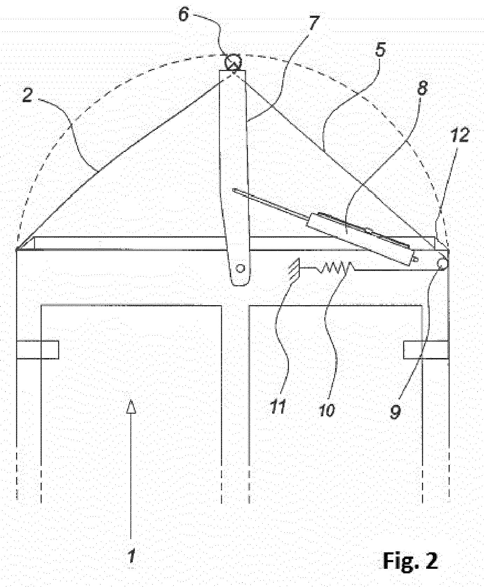

On Figs. 1 and 2 are shown a lorry with a transport body 1 which at the top is provided with a covering device, where a tarpaulin 2 consisting of the two parts 2a and 2b is laid out across the opening 4 in the transport body 1 by rolling off the tarpaulin 2 from a shaft 6 by means of a pivotable arm arrangement 3, see also Fig. 2, where a winding up of a wire 5 is effected simultaneously on a reel section at each their end of the shaft 6. The shaft 6 is suspended at respective ends in a pivotable arm system 3 where a pivotable arm 7 is rotatably seated at the edge of the end walls of the transport body 1. A hydraulic cylinder 8 is mounted such that the pivotable arm 7 can be pivoted from side to side via activation of the hydraulic cylinder 8. The wire 5 is coiled around the shaft 6 with a winding direction opposite of that of the tarpaulin 2. In that the pivotable arm 7 is moved in a given direction, e.g. clockwise, see Fig. 2, the cover 2 is rolled across the opening as the wire 5 is wound up on the shaft 6 simultaneously. As shown on Fig. 2, the wire 5 is passed out via an end roller 9 at the opposite side of the transport body 1 relative to the tarpaulin fastening point. The wire 5 is provided with a spring 10 immediately in front of the fastening point 11 in the frame of the transport body 1. As the tarpaulin 2 can be differently loaded, e.g. by precipitation on the tarpaulin 2 or by deflection of the shaft 6, etc., the pivot arm systems 3 at the two ends will be differently influenced. By fastening the wire 5 through a spring 10 at each end it is ensured that any inaccuracies in the unrolling or rolling on of the tarpaulin 2 are absorbed by the spring 10 such that damage on the tarpaulin 2 is avoided. Along the side edge, opposite the fastening point of the tarpaulin, there is arranged receiving means 12 on which the shaft 6 can bear when the tarpaulin 2 is fully unrolled. Receiving means are similarly arranged along end edges of the transport body 1 in order to seal off the cover in this area. The hydraulic cylinder 8 is connected to the pivotable arm 7 such that it is retracted when the tarpaulin is unrolled. The piston rod in the hydraulic cylinder 8 is hereby protected against wear caused by wind and weather. Together with the rest of the pivotable system 3, the hydraulic cylinder 8 is mounted so high on the transport body 1 that it is possible to open the tailboard on the transport body 1. The hydraulic cylinder 8 can be connected to the electric-hydraulic system powered by the electric system of the lorry and operated by the driver, e.g. from the driver's cab, by a remote control which may either be cabled or wireless, for example by means of radio waves or infrared transmission. The device can readily be operated hereby.

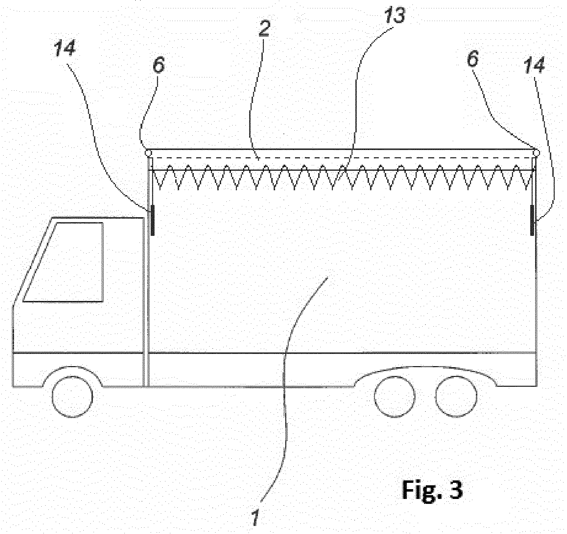

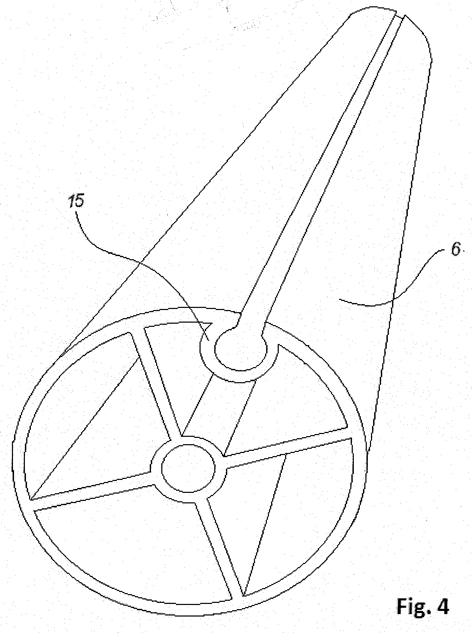

On Fig. 3 is shown the fastening point of the two-part tarpaulin 2, wherein one end is fastened to the shaft 6, e.g. as shown on Fig. 4, and rolled around the latter with a given direction of winding, and the other end fastened to the side edge of the transport body 1 with through-going rubber strap 13 arranged in a zig-zag pattern between the transport body 1 and the tarpaulin 2. At each of the two end edges of the tarpaulin 2 is fitted a wide strap embedded in the tarpaulin 2 and mounted on the transport body 1 by a strong rubber strap 14. The end edges of the tarpaulin 2 are hereby held tightly against the edge of the transport body 1, preventing the former from fluttering during driving due to the windspeed.

On Fig. 4 is shown a possible embodiment of the fastening of the tarpaulin 2 on the pivotable shaft 6 where the tarpaulin 2 is fastened to the shaft 6, which e.g. can be made of extruded aluminium, by a groove 15 made for the purpose. The tarpaulin 2 which e.g. is provided with an embedded wire, is pushed into the groove 15 from one end followed by mounting of end covers on the shaft 6. Local stresses in the tarpaulin 2 are hereby reduced as they are evenly distributed across the length of the groove 15 while at the same time increasing speed of mounting as no holes are to be drilled, no screw thread to be cut and no screws are to be fitted in the shaft 6.

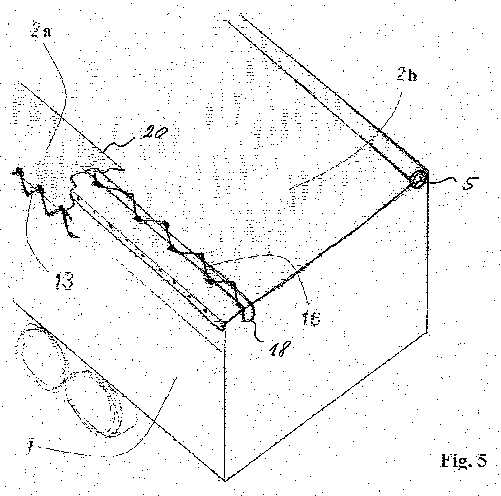

On Fig. 5 is shown the embodiment of joining the two main parts 2a and 2b of the flexible cover. Tarpaulin part 2b is fastened on the transport body 1 by a preferably inflexible way of fastening where the tarpaulin part 2b is of a size which just can cover the transport body 1 if loaded with a top. When driving without a top on the load, the excess tarpaulin 2b is tightened by means of the rubber strap 16 fastened in a corresponding pattern the rubber strap 13. The tarpaulin part 2a is fastened to the tarpaulin part 2b by a joint 20 whereby the tarpaulin part 2a protects it against accumulation of e.g. water or spilled goods in the fold 18 of tarpaulin part 2b appearing at the rubber strap 16. Hereby is achieved a self-tightening action by means of the flexible fastening of the two parts of the tarpaulin 2 even when the transport body 1 is loaded with a top.

## Claims

1. A cover for a transport body (1), such as a platform on a lorry, a trailer, or a container, the transport body (1) having a bottom and a number of sides, the transport body (1) being open upwards and covered by at least one flexible cover (2), the cover (2) capable of being rolled up around a shaft (6) by opening, the shaft (6) interacting with at least one hydraulic cylinder (8) which by means of pivotable arms (7) forces the shaft (6) to perform a curving movement above the transport body (1), where the shaft (6) is connected with rotary means that rotate the shaft (6) during the curving movement, the flexible cover is fastened to a first of the sides of the transport body, the flexible cover (2) is fastened to the shaft (6), that by covering the transport body the shaft (6) bears against the top of the transport body (1), the flexible cover has a fold (18) formed by a rubber strap (16), that the rubber strap is fastened to the flexible cover (2) at both sides of the fold (18), **characterised in that** the fold is parallel to the shaft, that the flexible cover (2) consists of a permanently mounted first section (2a) and a second, rollable section (2b), that the permanently mounted first section (2a) has a side which is fastened by at least one flexible fastening means (13) to a first of the sides of the transport body (1), that the rollable second section (2b) of the flexible cover (2) is fastened to the first side of the transport body as well, that the first (2a) and second (2b) sections of the flexible cover (2) are joined (20) along the fold (18) in the second section of the flexible cover (2b), whereby the fold (18) in the second section (2b) is covered by the first section (2a).

2. A cover according to claim 1, **characterised in that** each end of the shaft (6) is seated in a pivotable arm (7) which is provided with a reel arrangement for reeling a wire (5) on and off, that the wire (5) is fastened at one end by a helical spring (10) to the transport body and at the other end wound around the shaft (6) with a direction of winding which is opposite relative to the flexible cover (2).

3. A cover according to claim 1 or 2, **characterised in that** each end of the shaft (6) is seated in a pivotable arm (7) where the shaft is connected to a hydraulic motor, that the motor is designed with a torque limiter for adapting the torque on the shaft to winding the flexible cover (2) on or off, respectively.

4. A cover according to one of claims 1-3, **characterised in that** the flexible cover (2) is fastened to the pivotable shaft (6) in a groove (15) in the shaft.

5. A cover according to one of claims 1-4, **characterised in that** pivotable arms (7), hydraulic cylinders (8) and wire devices (5) are designed such that they can be mounted at a level on the chassis of the transport body (1) which will enable opening of the transport body (1) at the rear.

6. A cover according to one of claims 1-5, **characterised in that** the flexible cover is formed by a segmented tarpaulin where the individual tarpaulin parts preferably are secured by using elastic rubber straps mounted in a zig-zag pattern.

7. A cover according to one of claims 1-6, **characterised in that** the shaft comprises a groove (15) in the pivotable shaft (6) for fastening the cover (2) to the shaft (6), the groove (15) being formed in an extruded tubular profile, preferably made of plastic, aluminium or metal, with a groove (15) for fastening the tarpaulin (2) in the pivotable shaft (6).

8. A cover according to one of claims 1-7, **characterised in that** the pivotable arms (7) are designed with a bend whereby the shaft (6) and the fastening of the hydraulic cylinder is elevated in relation to the fastening of the pivotable arm on the transport body (1).

## Patentansprüche

1. Abdeckung für einen Transportkörper (1), beispielsweise eine Plattform auf einem Lastkraftwagen, einem Anhänger oder einem Container, wobei der Transportkörper (1) einen Boden und mehrere Seiten aufweist, wobei der Transportkörper (1) nach oben hin offen ist und durch mindestens eine flexible Abdeckung (2) abgedeckt ist, wobei die Abdeckung (2) beim Öffnen um eine Welle (6) aufrollbar ist, wobei die Welle (6) mit mindestens einem Hydraulikzylinder (8) zusammenwirkt, der mittels schwenkbarer Arme (7) die Welle (6) dazu zwingt, eine Kurvenbewegung über dem Transportkörper (1) auszuführen, wobei die Welle (6) mit Drehmitteln verbunden ist, die die Welle (6) während der Kurvenbewegung flexibel drehen, wobei die Abdeckung an einer ersten der Seiten des Transportkörpers befestigt ist, wobei die flexible Abdeckung (2) an der Welle (6) befestigt ist, dass durch Abdecken des Transportkörpers die Welle (6) an der Oberseite des Transportkörpers (1) anliegt, wobei die flexible Abdeckung eine Falte (18) aufweist, die aus einem Gummiband (16) gebildet wird, dass das Gummiband an der flexiblen Abdeckung (2) an beiden Seiten der Falte (18) befestigt ist, **dadurch gekennzeichnet, dass** die Falte parallel zum Schaft verläuft, dass die flexible Abdeckung (2) aus einem permanent montierten ersten Abschnitt (2a) und einem zweiten, rollbaren Abschnitt (2b) besteht, dass der permanent montierte erste Abschnitt (2a) eine Seite aufweist, die mit mindestens einem flexiblen Befestigungsmittel (13) an einer ersten Seite des Transportkörpers (1) befestigt ist, dass der rollbare zweite Abschnitt (2b) der flexiblen Abdeckung (2) ebenfalls an der ersten Seite des Transportkörpers (1) befestigt ist, dass der erste (2a) und der zweite (2b) Abschnitt der flexiblen Abdeckung (2) entlang der Falte (18) im zweiten Abschnitt der flexiblen Abdeckung (2b) verbunden (20) sind, wodurch die Falte (18) im zweiten Abschnitt (2b) vom ersten Abschnitt (2a) überdeckt wird.

2. Abdeckung nach Anspruch 1, **dadurch gekennzeichnet, dass** jedes Ende der Welle (6) in einem schwenkbaren Arm (7), der mit einer Spulenanordnung zum Auf- und Abwickeln eines Drahtes (5) versehen ist, sitzt, dass der Draht (5) an einem Ende durch eine Schraubenfeder (10) am Transportkörper befestigt ist und am anderen Ende um die Welle (6) mit einer der flexiblen Abdeckung (2) entgegengesetzten Wickelrichtung gewickelt ist.

3. Abdeckung nach Anspruch 1 oder 2, **dadurch gekennzeichnet, dass** jedes Ende der Welle (6) in einem schwenkbaren Arm (7) sitzt, wo die Welle mit einem Hydraulikmotor verbunden ist, dass der Motor der mit einem Drehmomentbegrenzer ausgeführt ist zum Anpassen des Drehmoments der Welle zum Auf- bzw. Abwickeln der flexiblen Abdeckung (2).

4. Abdeckung nach einem der Ansprüche 1-3, **dadurch gekennzeichnet, dass** die flexible Abdeckung (2) an der schwenkbaren Welle (6) in einer Nut (15) in der Welle befestigt ist.

5. Abdeckung nach einem der Ansprüche 1-4, **dadurch gekennzeichnet, dass** schwenkbaren Arme (7), Hydraulikzylinder (8) und Drahtvorrichtungen (5) derart ausgebildet sind, dass sie am Fahrgestell des Transportkörpers (1) auf einer Höhe montiert werden können, die das Öffnen des Transportkörpers (1) an der Rückseite ermöglicht.

6. Abdeckung nach einem der Ansprüche 1 bis 5, **dadurch gekennzeichnet, dass** die flexible Abdeckung durch eine segmentierte Plane gebildet ist, wobei die einzelnen Planenteile vorzugsweise unter Verwendung elastischer, in einem Zick-Zack-Muster angebrachte Gummibänder befestigt sind.

7. Abdeckung nach einem der Ansprüche 1-6, **dadurch gekennzeichnet, dass** die Welle eine Nut (15) in der schwenkbaren Welle (6) zur Befestigung der Abdeckung (2) an der Welle (6) aufweist, wobei die Nut (15) aus einem extrudierten Rohrprofil gebildet ist, vorzugsweise aus Kunststoff, Aluminium oder Metall, mit einer Nut (15) zur Befestigung der Plane (2) in der schwenkbaren Welle (6).

8. Abdeckung nach einem der Ansprüche 1-7, **dadurch gekennzeichnet, dass** die schwenkbaren Arme (7) mit einer Biegung ausgeführt sind, durch die die Welle (6) und die Befestigung des Hydraulikzylinders relativ zur Befestigung des schwenkbaren Arms am Transportkörper (1) erhöht sind.

## Revendications

1. Couvercle pour un corps de transport (1), tel qu'une plateforme sur un camion, une remorque, ou un conteneur, le corps de transport (1) ayant un fond et un certain nombre de côtés, le corps de transport (1) étant ouvert vers le haut et recouvert par au moins un couvercle souple (2), le couvercle (2) pouvant être enroulé autour d'un arbre (6) par ouverture, l'arbre (6) coopérant avec au moins un vérin hydraulique (8) qui au moyen de bras pivotants (7) force l'arbre (6) à effectuer un mouvement de courbure au-dessus du corps de transport (1), où l'arbre (6) est relié à des moyens rotatifs qui font tourner l'arbre (6) pendant le mouvement de courbure, le couvercle flexible est fixé à un premier des côtés du corps de transport, le couvercle flexible (2) est fixé à l'arbre (6), qu'en recouvrant le corps de transport, l'arbre (6) s'appuie contre la partie supérieure du corps de transport (1), le couvercle souple comporte un pli (18) formé par une sangle de caoutchouc (16), que la sangle en caoutchouc est fixée au couvercle souple (2) des deux côtés du pli (18), **caractérisé en ce que** le pli est parallèle à l'arbre que le couvercle souple (2) consiste en une première section montée en permanence (2A) et une seconde section enroulable (2b), que la première section montée en permanence (2A) a un côté qui est fixé par au moins un moyen de fixation flexible (13) à un premier des côtés du corps de transport (1), que la seconde section enroulable (2b) du couvercle souple (2) est fixée au premier côté du corps de transport de la même manière, que les première (2a) et seconde (2b) sections du couvercle souple (2) sont jointes (20) le long du pli (18) dans la seconde section du couvercle souple (2b), le pli (18) dans la seconde section (2b) étant recouvert par la première section (2a).

2. Couvercle selon la revendication 1, **caractérisé en ce que** chaque extrémité de l'arbre (6) est logée dans un bras pivotant (7) qui est pourvu d'un agencement de bobine pour bobiner et dévider un fil (5), que le fil (5) est fixé à une extrémité par un ressort hélicoïdal (10) au corps de transport et à l'autre extrémité enroulé autour de l'arbre (6) avec une direction d'enroulement qui est opposée par rapport au couvercle souple (2).

3. Couvercle selon la revendication 1 ou 2, **caractérisé en ce que** chaque extrémité de l'arbre (6) est logée dans un bras pivotant (7) où l'arbre est relié à un moteur hydraulique, que le moteur est conçu avec un limiteur de couple pour adapter le couple sur l'arbre pour bobiner ou dévider respectivement le couvercle souple (2).

4. Couvercle selon l'une des revendications 1 à 3, **caractérisé en ce que** le couvercle souple (2) est fixé à l'arbre pivotant (6) dans une rainure (15) de l'arbre.

5. Couvercle selon l'une des revendications 1 à 4, **caractérisé en ce que** des bras pivotants (7), des vérins hydrauliques (8) et des dispositifs filaires (5) sont conçus de telle sorte qu'ils peuvent être montés à un niveau sur le châssis du corps de transport (1) qui permettra l'ouverture du corps de transport (1) à l'arrière.

6. Couvercle selon l'une des revendications 1 à 5, **caractérisé en ce que** le couvercle souple est formé par une bâche segmentée où les parties de bâche individuelles de préférence sont fixées en utilisant des sangles élastiques en caoutchouc montées selon un motif en zigzag.

7. Couvercle selon l'une des revendications 1 à 6, **caractérisé en ce que** l'arbre comprend une rainure (15) dans l'arbre pivotant (6) pour fixer le couvercle (2) à l'arbre (6), la rainure (15) étant formée dans un profilé tubulaire extrudé, de préférence en matière plastique, en aluminium ou en métal, avec une rainure (15) pour la fixation de la bâche (2) dans l'arbre pivotant (6).

8. Couvercle selon l'une des revendications 1 à 7, **caractérisé en ce que** les bras pivotants (7) sont conçus avec un coude par lequel l'arbre (6) et la fixation du vérin hydraulique sont élevés par rapport à la fixation du bras pivotant sur le corps de transport (1).
